# FASCICULE DE BREVET EUROPEEN

(11) **EP 1 285 435 B1**
(45) Date de publication et mention de la délivrance du brevet: **21.03.2007**
(21) Numéro de dépôt: 01936520.4
(22) Date de dépôt: 15.05.2001
(51) Int. Cl.: G10L 15/18, G10L 15/22

(54) **ANALYSE SYNTAXIQUE ET SEMANTIQUE DE COMMANDES VOCALES**
SYNTAX- UND SEMANTISCHE-ANALYSE VON SPRACHBEFEHLEN
SYNTACTIC AND SEMANTIC ANALYSIS OF VOICE COMMANDS

(30) Priorité: 23.05.2000 FR 0006576
(43) Date de publication de la demande: 26.02.2003
(73) Titulaire: Thomson Licensing, 92100 Boulogne-Billancourt (FR)
(72) Inventeur: LE HUITOUZE, Serge, 92648 Boulogne Cedex (FR); SOUFFLET, Frédéric, 92648 Boulogne Cedex (FR)
(74) Mandataire: Kohrs, Martin
(86) Numéro de dépôt international: PCT/FR2001/001470
(87) Numéro de publication internationale: WO 2001/091108

(56) Documents cités:
- US-A- 5 839 106
- MAST M ET AL: "A SPEECH UNDERSTANDING AND DIALOG SYSTEM WITH A HOMOGENEOUS LINGUISTIC KNOWLEDGE BASE" IEEE TRANSACTIONS ON PATTERN ANALYSIS AND MACHINE INTELLIGENCE, IEEE INC. NEW YORK, US, vol. 16, no. 2, 1 février 1994 (1994-02-01), pages 179-193, XP000439829 ISSN: 0162-8828
- DEMETRIOU G. AND ATWELL E.: "Semantics in Speech Recognition and Understanding : A Survey" COMPUTATIONAL LINGUISTICS FOR SPEECH AND HANDWRITING RECOGNITION, AISB'94 WORKSHOP, 1994, XP002174005 University of Leeds
- KAWAHARA T ET AL: "HEURISTIC SEARCH INTEGRATING SYNTACTIC, SEMANTIC AND DIALOG-LEVEL CONSTRAINTS" PROCEEDINGS OF THE INTERNATIONAL CONFERENCE ON ACOUSTICS, SPEECH, ANDSIGNAL PROCESSING (ICASSP). SPEECH PROCESSING 2, AUDIO, UNDERWATER ACOUSTICS, VLSI AND NEURAL NETWORKS. ADELAIDE, APR. 19 - 22, 1994, PROCEEDINGS OF THE INTERNATIONAL CONFERENCE ON , vol. 2 CONF. 19, 19 avril 1994 (1994-04-19), pages II-25-II-28, XP000528443 ISBN: 0-7803-1776-9

## Description

La présente invention se rapporte au domaine de la reconnaissance vocale.

Plus précisément, l'invention concerne les interfaces vocales à large vocabulaire. Elle s'applique notamment aux systèmes de commande et de contrôle, par exemple dans le domaine de la télévision et du multimédia.

Les systèmes d'information ou de contrôle utilisent de plus en plus souvent une interface vocale pour rendre rapide et intuitive l'interaction avec l'utilisateur. Ces systèmes devenant plus complexes, les styles de dialogue supportés doivent être de plus en plus riches, et l'on entre donc dans le domaine de la reconnaissance vocale continue, à large vocabulaire.

On sait que la conception d'un système de reconnaissance vocale continue, à large vocabulaire, suppose la production d'un modèle de langage qui définit ou approxime des enchaînements acceptables de mots, ces enchaînements constituant des phrases reconnues par le modèle de langage.

Dans un système à large vocabulaire, le modèle de langage permet donc à un module de traitement vocal de construire la phrase (c'est-à-dire la suite de mots) la plus probable par rapport au signal acoustique qui lui est présenté. Cette phrase doit ensuite être analysée par un module de compréhension afin de la transformer en une série d'actions adéquates (commandes) au niveau du système commandé vocalement, voir par exemple le système proposé dans le brevet US 5,839,106.

Actuellement, deux approches sont couramment utilisées par les modèles de langage, à savoir les modèles de type N-gram et les grammaires.

Dans l'état actuel de la technologie, les modèles de langage de type N-gram sont notamment utilisés dans les systèmes de dictée vocale, parce que le but de ces applications n'est que de transcrire un signal sonore en une suite de mots, tandis que les systèmes à base de grammaires stochastiques sont présents dans les systèmes de commande et contrôle vocal, parce que le sens de la phrase transcrite doit être analysé.

Dans le cadre de la présente invention, on emploie donc des grammaires stochastiques.

Selon l'état de la technique, les systèmes de reconnaissance vocale utilisant des grammaires sont, pour la plupart, basés sur l'architecture normalisée du modèle SAPI (de l'anglais " Speech Application Programming Interface " ou en français Interface de programmation d'application vocale ") défini par la société Microsoft (marque déposée) et réalisent deux actions indépendantes de manière séquentielle :
- une reconnaissance de phrase prononcée avec utilisation d'un modèle de langage ; et
- une analyse (" parsing ") de la phrase reconnue.

La représentation du modèle de langage utilisée au niveau du module de traitement vocal permet de connaître facilement les mots qui peuvent suivre un mot donné selon l'hypothèse considérée à l'étape actuelle du traitement du signal acoustique.

Très souvent, la grammaire de l'application est convertie en un automate à états fini, car cette représentation rend facile l'intégration du modèle de langage que constitue la grammaire dans les schémas de décodage de type N-best avec élagage couramment utilisé dans les moteurs actuels. Cette technique est notamment décrite dans l'ouvrage "Statistical Methods for Speech Recognition" (ou en français " Méthodes statistiques pour la reconnaissance vocale "), écrit par Frederick Jelinek et paru en 1998 aux éditions MIT Press.

Le module d'analyse est généralement un analyseur syntaxique traditionnel (appelé *"parseur* "), qui traverse l'arbre syntaxique de la grammaire et effectue, en certains points appelés "points de génération ", des données sémantiques déterminées a priori. Des exemples de modules d'analyse sont décrits dans le livre "Compilateurs. Principes, techniques et outils", écrit par Alfred Aho, Ravi Sethi et Jeffrey Ullman et paru en 1989 aux éditions InterEditions.

La qualité d'un modèle de langage peut être mesurée par les indices suivants:
- Sa perplexité, qui se définit comme le nombre moyen de mots qui peuvent suivre un mot quelconque dans le modèle en question. Plus la perplexité est faible, moins l'algorithme de reconnaissance acoustique est sollicité, puisqu'il doit prendre une décision devant un nombre plus faible de possibilités.
- Son encombrement mémoire, c'est-à-dire la place qu'il occupe en mémoire. Ceci est particulièrement important pour les applications embarquées à large vocabulaire, dans lesquels le modèle de langage peut être la partie de l'application la plus consommatrice de mémoire.

Un inconvénient de l'art antérieur est notamment un encombrement mémoire relativement important pour un modèle de langage ayant une perplexité donnée.

Par ailleurs, selon l'état de l'art, la phrase proposée par le module de reconnaissance est transmise au module d'analyse syntaxique, qui utilise un " parseur " pour la décoder.

En conséquence, un autre inconvénient de cette technique de l'art antérieur est qu'il existe un temps d'attente non négligeable pour l'usager entre le moment où il parle et la reconnaissance effective de ses paroles.

L'invention selon ses différents aspects a notamment pour objectif de pallier ces inconvénients de l'art antérieur.

Plus précisément, un objectif de l'invention est de fournir un système et un procédé de reconnaissance vocale permettant d'optimiser l'utilisation de la mémoire pour une perplexité donnée.

Un autre objectif de l'invention est de réduire le temps d'attente de la fin de la reconnaissance vocale après qu'une phrase est prononcée.

Dans ce but, l'invention telle que définie par les revendications indépendantes, propose un procédé de reconnaissance vocale remarquable en ce qu'il comprend une étape de traitement acoustique d'échantillons vocaux et une étape de détermination d'une commande destinée à être appliquée à au moins un dispositif, et en ce que les étapes de traitement acoustique et de détermination d'une commande utilisent une seule représentation en mémoire d'un modèle de langage.

On note que le modèle de langage comprend notamment :
- des éléments permettant l'étape de traitement acoustique tels que, par exemple, les éléments présents dans une grammaire utilisée habituellement par des moyens de reconnaissance de phrase prononcée ; et
- des éléments nécessaires à l'extraction d'une commande comme par exemple, des points de génération décrits plus loin.

Par commande, on entend ici toute action ou ensemble d'actions simultanées et/ou successives sur un dispositif sous forme, notamment, de dialogue, de contrôle ou de commande au sens strict.

On note, également, que l'étape de génération d'une commande permet de générer une commande qui peut dans certaines conditions être directement compréhensible par un dispositif; dans le cas où la commande n'est pas directement compréhensible, sa traduction demeure simple à effectuer.

Selon une caractéristique particulière, le procédé de reconnaissance vocale est remarquable en ce que l'étape de traitement acoustique d'échantillons vocaux comprend l'identification d'au moins une suite de données sémantiques tenant compte des échantillons vocaux et du modèle de langage, la suite alimentant directement l'étape de détermination de commande.

On note que l'expression " données sémantiques " signifie ici " points de génération".

Selon une caractéristique particulière, le procédé de reconnaissance vocale est remarquable en ce que l'étape de détermination d'une commande comprend une sous-étape de génération d'une suite de données sémantiques à partir du modèle de langage et du résultat de l'étape de traitement acoustique, de façon à permettre la génération de la commande.

Selon une caractéristique particulière, le procédé de reconnaissance vocale est remarquable en ce que la sous-étape de génération d'une suite de données sémantiques comprend la fourniture des données sémantiques au fur et à mesure d'une remontée de treillis.

Ainsi, l'invention permet, de manière avantageuse, une mise en oeuvre relativement simple et économique, applicable notamment aux modèles de langage à large vocabulaire.

En outre, l'invention permet avantageusement une reconnaissance fiable qui, préférentiellement, est basée sur le décodage vocal des éléments nécessaires à la détermination d'une commande.

L'invention concerne également un dispositif de reconnaissance vocale remarquable en qu'il comprend des moyens de traitement acoustique d'échantillons vocaux et des moyens de détermination d'une commande destinée à être appliquée à au moins un dispositif, et en ce que les moyens de traitement acoustique et de détermination d'une commande utilisent une même représentation en mémoire d'un modèle de langage.

L'invention concerne, en outre, un produit programme d'ordinateur comprenant des éléments de programme, enregistrés sur un support lisible par au moins un microprocesseur, remarquable en ce que les éléments de programme contrôlent le ou les microprocesseurs pour qu'ils effectuent une étape de traitement acoustique d'échantillons vocaux et une étape de détermination d'une commande destinée à être appliquée à au moins un dispositif, les étapes de traitement acoustique et de détermination d'une commande utilisant une même représentation en mémoire d'un modèle de langage.

L'invention concerne, aussi, un produit programme d'ordinateur, remarquable en ce que le programme comprend des séquences d'instructions adaptées à la mise en oeuvre du procédé de reconnaissance vocale décrit précédemment lorsque le programme est exécuté sur un ordinateur.

Les avantages du dispositif de reconnaissance vocale, et des produits programme d'ordinateur sont les mêmes que ceux du procédé de reconnaissance vocale, ils ne sont pas détaillés plus amplement.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique général d'un système comprenant un boîtier à commande vocale, dans lequel la technique de l'invention est mise en oeuvre;
- la figure 2 présente un synoptique du boîtier de reconnaissance vocale du système de la figure 1;
- la figure 3 décrit un schéma électronique d'un boîtier de reconnaissance vocale mettant en oeuvre le synoptique de la figure 2;
- la figure 4 décrit un automate à états fini utilisé selon un procédé de reconnaissance vocale connu en soi ;
- la figure 5 décrit un automate à états fini utilisé par le boîtier illustré en regard des figures 1 à 3 ; et
- la figure 6 décrit un algorithme de reconnaissance vocale mis en oeuvre par le boîtier illustré en regard des figures 1 à 3, basé sur l'utilisation de l'automate de la figure 5.

Le principe général de l'invention repose donc notamment, par rapport aux techniques connues, sur une collaboration plus étroite entre le module de traitement vocal et le module de compréhension, par le partage effectif de leur partie commune, à savoir le modèle de langage.

La représentation de ce modèle de langage doit être telle qu'elle permet son exploitation efficace selon ses deux modalités d'utilisation.

Selon l'invention, on utilise une seule représentation de la grammaire. (Alors que selon l'état de la technique antérieure, la grammaire est représentée deux fois : une première fois, pour le modèle de langage, par exemple, typiquement sous la forme d'un automate à états fini et une seconde fois, dans l'analyseur syntaxique, par exemple sous la forme d'un parseur LL(k). Or, ces deux modules portent la même information dupliquée sous deux formes différentes, à savoir les enchaînements syntaxiques autorisés.)

Par ailleurs, selon l'invention, la phase d'analyse syntaxique (ou de " parsing ") n'existe pas : il n'y a plus de phrase échangée entre les deux modules pour analyse. Le " back-tracking " (ou " remontée du treillis " en français) utilisé classiquement en reconnaissance vocale (tel que décrit dans l'ouvrage de Jelinek cité précédemment), est suffisant pour la phase de compréhension permettant la détermination d'une commande.

L'invention permet d'assurer la fonctionnalité requise, à savoir la reconnaissance de commandes à partir d'échantillons vocaux. Cette fonctionnalité est assurée par une représentation partagée par le module de traitement vocal et le module de compréhension.

On rappelle, d'abord, les deux utilisations habituelles de la grammaire :
- indiquer les mots qui peuvent suivre une suite de mots donnée, afin de les comparer avec le signal acoustique entrant dans le système ;
- partant de la suite de mots déclarée comme la plus probable, l'analyser afin de connaître sa structure, et déterminer ainsi les actions à effectuer sur le système commandé vocalement.

Selon l'invention, la structure partagée comprend l'information pertinente aux deux utilisations.

Plus précisément, elle représente une hypothèse (dans notre contexte, une amorce gauche de phrase) de telle sorte qu'il soit aisé d'en extraire les mots qui peuvent prolonger cette amorce, et aussi de pouvoir répéter le processus en ajoutant un mot supplémentaire à une hypothèse existante. Ceci couvre les besoins du module de traitement vocal.

De plus, la structure partagée contient, dans le cas d'une hypothèse " terminale" (c'est-à-dire correspondant à une phrase complète), une représentation de l'arbre syntaxique associé. Un raffinement est intégré à ce niveau : plutôt que de représenter véritablement l'arbre syntaxique associé à une hypothèse terminale, on représente le sous-ensemble pertinent du point de vue de la compréhension de la phrase, c'est-à-dire des actions à effectuer sur le système commandé vocalement. Ceci correspond à ce qui est fait, selon les techniques de l'art antérieur, dans les analyseurs syntaxiques. Selon l'invention, on ne s'intéresse pas à l'arbre syntaxique complet (correspondant à l'enchaînement exhaustif des règles qui ont permis d'analyser le texte d'entrée), mais seulement au sous-ensemble qui véhicule du sens. La construction de la partie signifiante se fait au moyen des " points de génération " tels que décrits notamment dans le livre d'Alfred Aho, Ravi Sethi and Jeffrey Ullman cité précédemment.

Les points de génération permettent d'associer une signification à un segment de phrase. Ils peuvent être, par exemple :
- des mots clés relatifs à cette signification ; ou encore
- des références à des procédures agissant directement sur le système à commander.

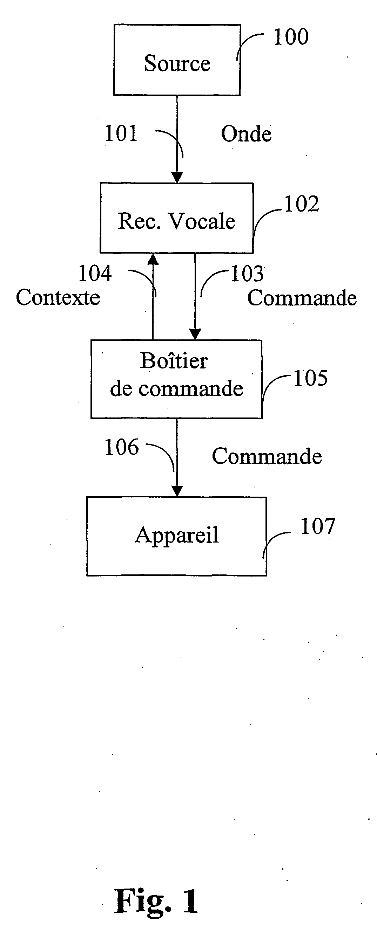

On présente, en relation avec la figure 1, un synoptique général d'un système comprenant un boîtier à commande vocale 102 mettant en oeuvre la technique de l'invention.

On note que ce système comprend notamment :
- une source vocale 100 pouvant notamment être constituée d'un microphone destiné à capter un signal vocal produit par un locuteur ;
- un boîtier de reconnaissance vocale 102 ;
- un boîtier de commande 105 destiné à piloter un appareil 107;
- un appareil commandé 107, par exemple de type téléviseur ou magnétoscope.

La source 100 est reliée au boîtier de reconnaissance vocale 102, via une liaison 101 qui lui permet de transmettre une onde source analogique représentative d'un signal vocal vers le boîtier 102.

Le boîtier 102 peut récupérer des informations 104 de contexte (telles que par exemple, le type d'appareil 107 pouvant être contrôlé par le boîtier de commande 105 ou la liste des codes de commandes) via une liaison 104 et émettre vers le boîtier de commande 105 des commandes via une liaison 103.

Le boîtier de commande 105 émet des commandes via une liaison 106 par exemple infrarouge vers l'appareil 107.

Selon le mode de réalisation considéré la source 100, le boîtier de reconnaissance vocale 102 et le boîtier de commande 105 font partie d'un même dispositif et ainsi les liaisons 101, 103 et 104 sont des liaisons internes au dispositif. Par contre, la liaison 106 est typiquement une liaison sans fil.

Selon une première variante de réalisation de l'invention décrite à la figure 1, les éléments 100, 102 et 105 sont en partie ou complètement séparés et ne font pas partie d'un même dispositif. Dans ce cas, les liaisons 101, 103 et 104 sont des liaisons externes filaires ou non.

Selon une deuxième variante, la source 100, les boîtiers 102 et 105 ainsi que l'appareil 107 font partie d'un même dispositif et sont reliés entre eux par des bus internes (liaisons 101, 103, 104 et 106). Cette variante est particulièrement intéressante quand le dispositif est, par exemple, un téléphone ou terminal de télécommunication portable.

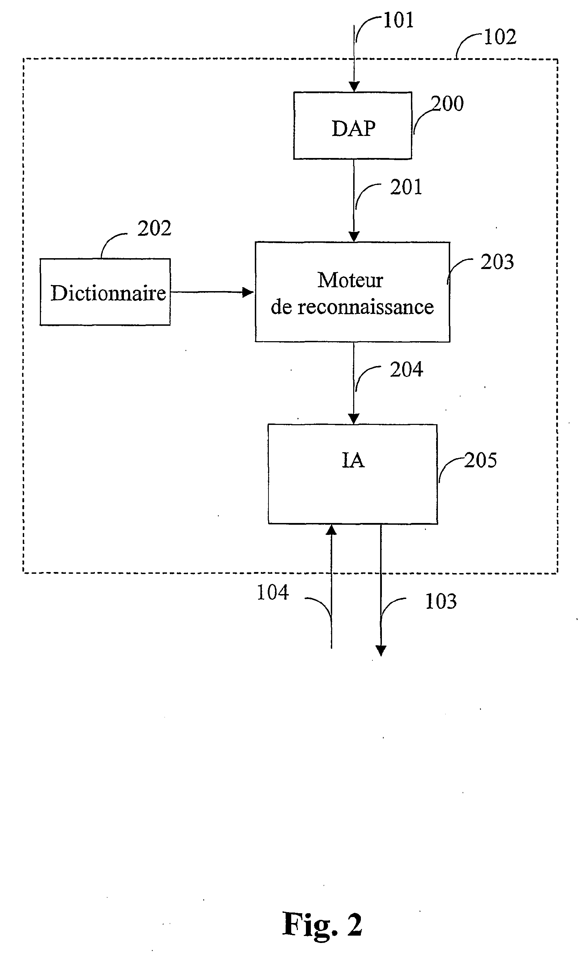

La figure 2 présente un synoptique d'un boîtier à commande vocale tel le boîtier 102 illustré en regard de la figure 1.

On note que le boîtier 102 reçoit de l'extérieur l'onde source analogique 101 qui est traitée par un Décodeur Acoustico-Phonétique 200 ou DAP (appelé " front-end " en anglais). Le DAP 200 échantillonne à intervalles réguliers (typiquement toutes les 10ms) l'onde source 101 pour produire des vecteurs réels ou appartenant à des livres de code (ou " code books " en anglais), représentant typiquement des résonances buccales qui sont émises via une liaison 201 vers un moteur de reconnaissance 203.

On rappelle qu'un décodeur acoustico-phonétique traduit les échantillons numériques en symboles acoustiques choisis dans un alphabet prédéterminé.

Un décodeur linguistique traite ces symboles dans le but de déterminer, pour une séquence *A* de symboles, la séquence *W* de mots la plus probable, étant donné la séquence *A*. Le décodeur linguistique comporte un moteur de reconnaissance utilisant un modèle acoustique et un modèle de langage. Le modèle acoustique est par exemple un modèle dit " Markov caché " (" Hidden Markov Model " ou HMM). Il calcule de façon connue en soi les scores acoustiques des séquences de mots considérées. Le modèle de langage mis en oeuvre dans le présent exemple de réalisation est basé sur une grammaire décrite à l'aide de règles de syntaxe de forme Backus Naur. Le modèle de langage est utilisé pour déterminer une pluralité d'hypothèses de séquences de mots et pour calculer des scores linguistiques.

Le moteur de reconnaissance est basé sur un algorithme de type Viterbi appelé "n-best". L'algorithme de type n-best détermine à chaque étape de l'analyse d'une phrase les *n* séquences de mots les plus probables. En fin de phrase, la solution la plus probable est choisie parmi les *n* candidats, à partir des scores fournis par le modèle acoustique et le modèle de langage.

On décrit maintenant plus particulièrement le fonctionnement du moteur de reconnaissance. Comme mentionné, ce dernier utilise un algorithme de type Viterbi (algorithme n-best) pour analyser une phrase composée d'une séquence de symboles (vecteurs) acoustiques. L'algorithme détermine les *N* séquences de mots les plus probables, étant donné la séquence *A* de symboles acoustiques observée jusqu'au symbole courant. Les séquences de mots les plus probables sont déterminées à travers le modèle de langage de type grammaire stochastiques. En liaison avec les modèles acoustiques des éléments terminaux de la grammaire, qui sont basés sur des HMM (Modèles de Markov Cachés ou " Hidden Markov Models "), on produit alors un modèle de Markov caché global pour l'application, qui inclut donc le modèle de langage et par exemple les phénomènes de coarticulations entre éléments terminaux. L'algorithme de Viterbi est mis en oeuvre en parallèle, mais au lieu de retenir une seule transition vers chaque état lors de l'itération i, on retient pour chaque état les N transitions les plus probables.

Des informations concernant en particulier les algorithmes de Viterbi, de recherche par faisceau et de " n-best " sont donnés dans l'ouvrage :

"Statistical methods for speech recognition " par Frederik Jelinek, MIT press 1999 ISBN 0-262-10066-5 chapitres 2 et 5 en particulier.

Le moteur de reconnaissance dispose d'un treillis constitué des états à chaque itération précédente de l'algorithme et des transitions entre ces états, jusqu'aux états finaux. En dernier lieu, on retient parmi les états finaux et leurs N transitions associées les N transitions les plus probables. En retraçant les transitions à partir des états finaux, on détermine les points de génération permettant de déterminer directement la commande correspondant aux symboles acoustiques applicables, sans avoir à déterminer précisément les N séquences de mots les plus probables d'une phrase complète. Ainsi, il est inutile de faire ici appel à un traitement spécifique utilisant un " parseur " dans un but de sélectionner l'unique séquence finale sur des critères grammaticaux.

Ainsi, à l'aide d'une grammaire 202 avec données sémantiques, le moteur de reconnaissance 203 analyse les vecteurs réels qu'il reçoit en utilisant notamment des modèles de Markov cachés ou HMM (de l'anglais Hidden Markov Models) et des modèles de langage (qui représentent la probabilité pour qu'un mot suive un autre mot) selon un algorithme de Viterbi avec une remontée de treillis lui permettant de déterminer directement la commande applicable contenant uniquement les mots clés nécessaires.

Le moteur de reconnaissance 203 fournit les données sémantiques qu'il a identifiées à partir des vecteurs reçus à un moyen de traduction de ces mots en commandes pouvant être comprises par l'appareil 107. Ce moyen utilise un procédé de traduction à intelligence artificielle qui lui-même prend en compte un contexte 104 fourni par le boîtier de commande 105 avant d'émettre une ou plusieurs commandes 103 vers le boîtier de commande 105.

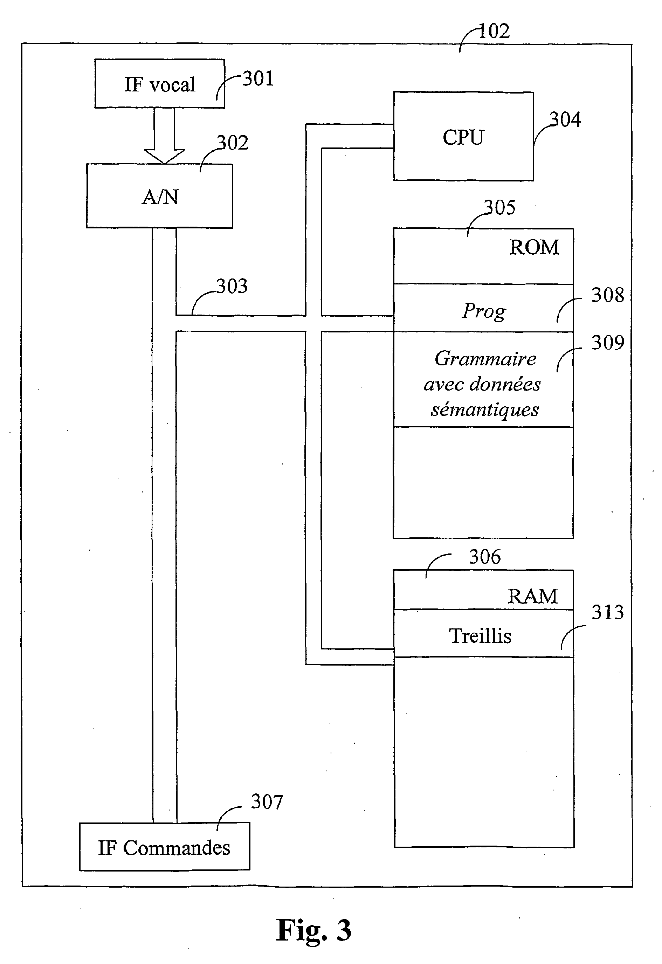

La figure 3 illustre schématiquement un module ou dispositif de reconnaissance vocale 102 tel qu'illustré en regard de la figure 1, et mettant en oeuvre le synoptique de la figure 2.

Le boîtier 102 comprend reliés entre eux par un bus d'adresses et de données:
- une interface vocale 301 ;
- un convertisseur Analogique-Numérique 302
- un processeur 304 ;
- une mémoire non volatile 305;
- une mémoire vive 306 ; et
- une interface 307 de commande d'un appareil.

Chacun des éléments illustrés en figure 3 est bien connu de l'homme du métier. Ces éléments communs ne sont pas décrits ici.

On observe en outre que le mot " registre " utilisé dans toute la description désigne dans chacune des mémoires mentionnées, aussi bien une zone de mémoire de faible capacité (quelques données binaires) qu'une zone mémoire de grande capacité (permettant de stocker un programme entier ou l'intégralité d'une séquence de données de transactions).

La mémoire non volatile 305 (ou ROM) conserve dans des registres qui par commodité possèdent les mêmes noms que les données qu'ils conservent :
- le programme de fonctionnement du processeur 304 dans un registre *"prog"* 308; et
- une grammaire avec données sémantiques dans un registre 309.

La mémoire vive 306 conserve des données, des variables et des résultats intermédiaires de traitement et comprend notamment une représentation d'un treillis 313.

On illustre maintenant le principe de l'invention dans le cadre des systèmes de reconnaissance vocale à large vocabulaire utilisant des grammaires pour décrire le modèle de langage, en rappelant, d'abord, le fonctionnement des systèmes de reconnaissance de l'état de la technique antérieur qui utilisent tous des grammaires fonctionnant de la façon esquissée ci-après.

Selon l'état de la technique antérieur, le modèle de langage de l'application est décrit sous forme d'une grammaire de type BNF (forme de Backus Naur) : l'ensemble des phrases qui peuvent être engendrées par réécritures successives des règles de la grammaire constituent précisément ce que l'application devra reconnaître.

Cette grammaire sert à construire un automate à états fini qui lui est équivalent. Cet automate fournit précisément les informations nécessaires au module de traitement vocal, comme décrit précédemment :
- les états correspondent à des hypothèses (débuts de phrase), avec un état initial correspondant au tout début de la phrase, et les états finaux correspondants aux hypothèses terminales (c'est-à-dire à des phrases complètes de la grammaire);
- les transitions correspondent aux mots qui peuvent venir immédiatement après l'hypothèse définie par l'état de départ de la transition, et elles mènent à une nouvelle hypothèse définie par l'état d'arrivée de la transition.

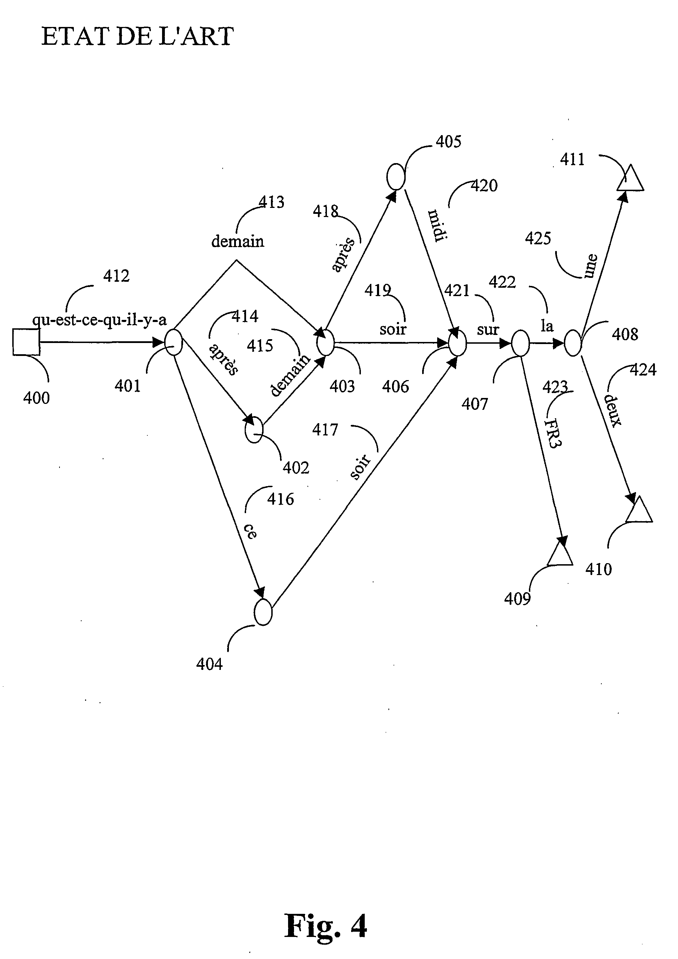

On illustre ce principe sur un exemple de grammaire à l'aide de la figure 4 qui décrit un automate à états fini utilisé selon un procédé de reconnaissance vocale de l'état de la technique.

Par souci de clarté, on considère un modèle de petite taille qui correspond à la reconnaissance d'une question liée au programme de chaîne de télévision. Ainsi, on suppose qu'un boîtier de commande vocale doit reconnaître une phrase du type " Qu'est qu'il y a à une certaine date sur une certaine chaîne de télévision ? ". La date considérée peut être : " ce soir ", " demain après-midi ", " demain soir "ou" après-demain soir ". La chaîne de télévision peut être " FR3 ", " la une " ou" la deux".

Selon la figure 4, l'automate à états fini correspondant comprend des noeuds (représentés par un carré pour l'état initial, des triangles pour les états finaux et des ronds les états intermédiaires) et des branches ou transitions (représentées par des flèches) entre noeuds.

On note que les transitions correspondent à des possibilités de mots isolés dans une phrase (par exemple, les mots " ce " 416, " soir " 417 ou demain 413, 415, les noeuds intermédiaires marquant la séparation entre différents mots.

Cet automate permet au module de traitement acoustique de déterminer les enchaînements admissibles des modèles phonétiques markoviens (HMM de l'anglais "Hidden Markov Model " ou " modèles de Markov cachés'') associés aux mots de la grammaire. La comparaison de ces enchaînements admissibles avec le signal acoustique permet de ne considérer que les plus probables, pour finalement sélectionner le meilleur enchaînement quand le signal acoustique est entièrement traité.

Ainsi, le module de traitement acoustique forme un treillis correspondant à cet automate en calculant les différentes métriques à partir des échantillons vocaux reçus. Puis, il détermine alors le noeud final 409, 410 ou 411 le plus vraisemblable pour reconstituer, en remontant le treillis l'enchaînement des mots correspondant, ce qui permet de construire complètement la phrase reconnue.

C'est cette phrase complète qui constitue la sortie du module de traitement vocal, et qui est fournie comme entrée au module de compréhension.

L'analyse de la phrase reconnue s'effectue classiquement grâce à un " parseur " qui vérifie que cette phrase est bien conforme à la grammaire et en extrait la " signification ". Pour ce faire, la grammaire est enrichie de données sémantiques (points de génération) permettant précisément d'extraire des phrases les informations souhaitées.

En considérant l'exemple précédent, on enrichit la grammaire de sorte de disposer après analyse de toute l'information nécessaire à l'application. Dans cet exemple, il faut connaître la date (aujourd'hui, demain, ou après-demain), la période dans la journée (l'après-midi ou le soir) et la chaîne (1, 2 ou 3). On dispose donc de points de génération pour renseigner la partie applicative sur le sens véhiculé par la phrase. Une grammaire possible pour cette application est présentée ci-dessous :
- <G> = qu-est-ce-qu-il-y-a <Date> sur <Chaîne>
- <Date> = ce soir **{jour (0) ; soir () ; }** |
   <Datel> <Complément>
- <Datel> = demain **{jour (1) ;}** |
   après demain **{jour (2);}**
- <Complément> = soir **{soir () ; }** |
   après midi **{aprmidi();}**
- <Chaîne> = la une {**ch(1);**} | la deux **{ch(2);}** |
   FR3 **{ch(3);}**
où
- le signe "|" représente une alternative ("A | B " signifiant donc" A
ou B ")
- les termes entre crochets indiquent une expression ou phrase pouvant être décomposée en mots ;
- les termes isolés représentent des mots ; et
- les termes en gras entre accolades représentent des points de génération.

Par exemple, les termes **{jour(0)}, {jour(1)}** et **{jour(2)}** représentent respectivement le jour courant, le lendemain et le surlendemain.

On peut alors construire un automate étendu, qui ne se contente pas de décrire les enchaînements de mots possibles, mais qui informe également de la " signification " de ces mots. Il suffit d'enrichir le formalisme utilisé pour représenter l'automate en y adjoignant des points de génération au niveau de certains arcs qui le nécessitent.

Avec une telle représentation, la phase habituelle de remontée du treillis, permettant de recomposer la phrase reconnue à la fin de l'algorithme de Viterbi, peut être légèrement modifiée afin de recomposer la suite des points de génération plutôt que la suite des mots. Ceci est une modification très minime, puisqu'il s'agit simplement de collecter une information (représentée en gras dans la grammaire ci-dessus) plutôt qu'une autre (représentée en caractères normaux dans la grammaire ci-dessus).

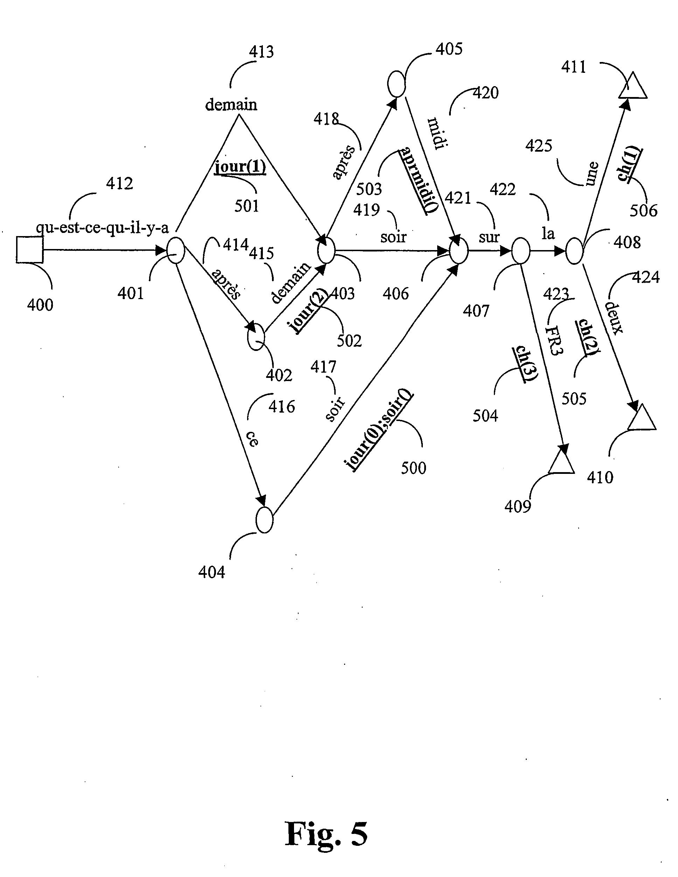

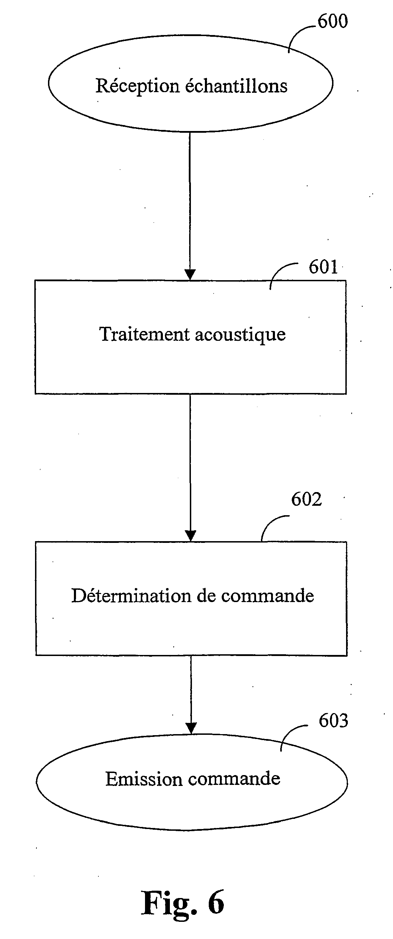

Selon l'invention, la figure 6 présente un procédé de reconnaissance vocale basée sur l'utilisation de l'automate illustré en figure 5 et utilisé dans le boîtier 102 de reconnaissance vocale tel que présenté en regard des figures 1 à 3.

Au cours d'une première étape 600, le boîtier 102 commence à recevoir des échantillons vocaux qu'il doit traiter.

Puis, au cours d'une étape 601 de traitement acoustique d'échantillons vocaux, le boîtier 102 construit un treillis sur base de l'automate de la figure 5 en fonction des échantillons reçus.

En considérant un exemple similaire à celui décrit précédemment, l'automate de la figure 5 comprend notamment les éléments d'un automate (avec les mots apparaissant au-dessus des arcs de transitions et en caractères normaux) tel qu'illustré en regard de la figure 4 enrichi de points de génération éventuels (au-dessous des arcs de transitions et en caractères gras).

Ensuite, au cours d'une étape 602 de détermination d'une commande, le boîtier 102 remonte le treillis construit lors de l'étape précédente pour estimer directement une suite de points de génération correspondant à une commande.

Cette commande est interprétée directement au cours d'une étape 603 pour être émise vers un ou plusieurs dispositifs auxquels elle est destinée, dans un langage compréhensible par ce ou ces dispositifs.

Ainsi, en utilisant le boîtier 102 construit dans un premier temps le treillis (étape 601) puis remonte le treillis sans construire une phrase complète mais en générant simplement la séquence de points de génération nécessaire à la détermination d'une commande. De cette manière, la même représentation de modèle vocal sous forme d'un automate est partagée par une étape acoustique et une étape d'estimation de commande.

Plus précisément, l'automate comprend le sous-ensemble pertinent d'information sémantique (comprenant notamment les points de génération) afin de permettre d'y accéder rapidement sans nécessité de reconstruire la phrase reconnue.

Ainsi, selon l'invention, il n'est plus nécessaire de reconstruire la phrase reconnue en tant que telle.

En outre, il n'est donc plus nécessaire d'avoir un analyseur syntaxique (ce qui permet un gain de place en terme de taille du code applicatif), ni évidemment de réaliser l'analyse syntaxique (ce qui entraîne un gain de temps en exécution, d'autant plus que ce temps ne peut pas être masqué par l'acte de parole de l'utilisateur), puisque l'on dispose directement d'une représentation efficace pour effectuer les actions au niveau du système commandé.

Bien entendu, l'invention n'est pas limitée aux exemples de réalisation mentionnés ci-dessus.

De même, le procédé de reconnaissance vocale ne se limite pas au cas où un algorithme de Viterbi est mis en oeuvre mais à tous les algorithmes utilisant un modèle de Markov, notamment dans le cas des algorithmes basés sur des treillis.

D'une manière générale, l'invention s'applique à toute reconnaissance vocale basée sur l'utilisation d'une grammaire qui ne nécessite pas la reconstruction complète d'une phrase pour générer une commande d'appareil à partir d'échantillons vocaux.

L'invention est particulièrement utile dans la commande vocale d'un téléviseur ou d'un autre type d'appareil grand public.

Par ailleurs, l'invention permet une économie d'énergie, notamment lorsque le procédé est mis en oeuvre dans un dispositif avec une source d'énergie autonome (par exemple une télécommande infra-rouge ou un téléphone mobile).

On note aussi que l'invention ne se limite pas à une implantation purement matérielle mais qu'elle peut aussi être mise en oeuvre sous la forme d'une séquence d'instructions d'un programme informatique ou toute forme mixant une partie matérielle et une partie logicielle. Dans le cas où l'invention est implantée partiellement ou totalement sous forme logicielle, la séquence d'instructions correspondante pourra être stockée dans un moyen de stockage amovible (tel que par exemple une disquette, un CD-ROM ou un DVD-ROM) ou non, ce moyen de stockage étant lisible partiellement ou totalement par un ordinateur ou un microprocesseur.

## Revendications

1. Procédé de reconnaissance vocale **caractérisé en ce qu'**il comprend une étape (601) de traitement acoustique d'échantillons vocaux (201) et une étape de détermination (602) d'une commande destinée à être appliquée à au moins un dispositif, et **en ce que** lesdites étapes de traitement acoustique et de détermination d'une commande utilisent une seule représentation (309) en mémoire (305) d'un modèle de langage, ladite unique représentation en mémoire utilise des données pour le traitement acoustique et des données sémantiques pour la compréhension de la phrase.

2. Procédé de reconnaissance vocale selon la revendication 1 **caractérisé en ce que** ladite étape de traitement acoustique d'échantillons vocaux comprend l'identification d'au moins une suite de données sémantiques (500 à 506) tenant compte desdits échantillons vocaux et dudit modèle de langage, ladite suite alimentant directement ladite étape de détermination de commande.

3. Procédé de reconnaissance vocale selon l'une quelconque des revendications 1 et 2 **caractérisé en ce que** ladite étape de détermination d'une commande comprend une sous-étape de génération d'une suite de données sémantiques à partir dudit modèle de langage et du résultat de ladite étape de traitement acoustique, de façon à permettre la génération de ladite commande.

4. Procédé de reconnaissance vocale selon la revendication 3 **caractérisé en ce que** ladite sous-étape de génération d'une suite de données sémantiques comprend la fourniture desdites données sémantiques au fur et à mesure d'une remontée de treillis.

5. Dispositif de reconnaissance vocale **caractérisé en ce qu'**il comprend un moteur de reconnaissance vocale (203) pour le traitement acoustique d'échantillons vocaux, ledit moteur comprenant une mémoire (305) contenant une seule représentation (309) d'un modèle de langage pour être utilisé par le moteur de reconnaissance vocale (203) dans le traitement acoustique et dans la détermination de la commande, ladite représentation (309) d'un modèle de langage incluant des données sémantiques (500à 506) pour la compréhension des données fournies par le traitement acoustique.

6. Produit programme d'ordinateur comprenant des éléments de programme, enregistrés sur un support lisible par au moins un microprocesseur, **caractérisé en ce que** lesdits éléments de programme contrôlent le ou lesdits microprocesseurs pour qu'ils effectuent une étape de traitement acoustique d'échantillons vocaux et une étape de détermination d'une commande destinée à être appliquée à au moins un dispositif, lesdites étapes de traitement acoustique et de détermination d'une commande utilisant une même représentation en mémoire d'un modèle de langage.

## Claims

1. A voice recognition process **characterized in that** it comprises a step (601) of acoustic processing of voice samples (201) and a step (602) of determination of a command intended to be applied to at least one device, and **in that** said steps of acoustic processing and of determination of a command use a single representation (309) in memory (305) of a language model.

2. The voice recognition process as claimed in claim 1, **characterized in that** said step of acoustic processing of voice samples comprises the identification of at least one set of semantic data (500 to 506) taking account of said voice samples and of said language model, said set directly feeding said command determination step.

3. The voice recognition process as claimed in any one of claims 1 and 2, **characterized in that** said step of determination of a command comprises a substep of generation of a set of semantic data on the basis of said language model and of the result of said acoustic processing step, so as to allow the generation of said command.

4. The voice recognition process as claimed in claim 3, **characterized in that** said substep of generation of a set of semantic data comprises the supplying of said semantic data in tandem with a trellis backtrack.

5. A voice recognition device, **characterized in that** it comprises means of acoustic processing of voice samples and means of determination of a command intended to be applied to at least one device, and **in that** said means of acoustic processing and of determination of a command use one and the same representation (309) in memory (305) of a language model.

6. A computer program product comprising program elements, recorded on a medium readable by at least one microprocessor, **characterized in that** said program elements control said microprocessor or microprocessors so that they perform a step of acoustic processing of voice samples and a step of determination of a command intended to be applied to at least one device, said steps of acoustic processing and of determination of a command using one and the same representation in memory of a language model.

## Patentansprüche

1. Verfahren zur Spracherkennung, **dadurch gekennzeichnet, dass** es einen Schritt (601) der akustischen Verarbeitung von Sprachabtastwerten (201) und einen Schritt der Festlegung (602) eines Befehls zur Anwendung auf mindestens eine Vorrichtung umfasst, und dass die Schritte der akustischen Verarbeitung und der Festlegung eines Befehls eine einzige Abbildung (309) eines Sprachmodells in einen Speicher (305) verwenden, wobei die einzige Speicherabbildung Daten für die akustische Verarbeitung und semantische Daten für das Satzverständnis verwendet.

2. Verfahren zur Spracherkennung nach Anspruch 1, **dadurch gekennzeichnet, dass** der Schritt der akustischen Verarbeitung von Sprachabtastwerten die Identifizierung von mindestens einer Folge von semantischen Daten (500 bis 506) unter Berücksichtigung der Sprachabtastwerte und des Sprachmodells umfasst, wobei die Folge den Schritt der Festlegung eines Befehls unmittelbar speist.

3. Verfahren zur Spracherkennung nach einem der Ansprüche 1 und 2, **dadurch gekennzeichnet, dass** der Schritt der Festlegung eines Befehls einen Unterschritt der Erzeugung einer Folge von semantischen Daten ausgehend von dem Sprachmodell und dem Ergebnis des Schritts der akustischen Verarbeitung umfasst, derart, dass die Erzeugung des Befehls ermöglicht wird.

4. Verfahren zur Spracherkennung nach Anspruch 3, **dadurch gekennzeichnet, dass** der Unterschritt der Erzeugung einer Folge von semantischen Daten die Bereitstellung der semantischen Daten entsprechend einem Trellis Back Tracking umfasst.

5. Vorrichtung zur Spracherkennung, **dadurch gekennzeichnet, dass** sie eine Spracherkennungsmaschine (203) für die akustische Verarbeitung von Sprachabtastwerten umfasst, wobei die Maschine einen Speicher (305) umfasst, die eine einzige Abbildung (309) eines Sprachmodells zur Verwendung durch die Spracherkennungsmaschine (203) bei der akustischen Verarbeitung und bei der Festlegung des Befehls enthält, wobei die Abbildung (309) eines Sprachmodells semantische Daten (500 bis 506) zum Verstehen der durch die akustische Verarbeitung bereitgestellten Daten beinhaltet.

6. Computerprogramm-Produkt mit auf einem durch mindestens einen Mikroprozessor lesbaren Träger gespeicherten Programmelementen, **dadurch gekennzeichnet, dass** die Programmelemente den bzw. die Mikroprozessoren kontrollieren, damit sie einen Schritt der akustischen Verarbeitung von Sprachabtastwerten und einen Schritt der Festlegung eines Befehls zur Anwendung auf mindestens eine Vorrichtung durchführen, wobei die Schritte der akustischen Verarbeitung und der Festlegung eines Befehls ein und dieselbe Speicherabbildung eines Sprachmodells verwenden.
